# EUROPEAN PATENT SPECIFICATION

(11) **EP 2 312 709 B1**
(45) Date of publication and mention of the grant of the patent: **12.12.2012**
(21) Application number: 09012903.2
(22) Date of filing: 13.10.2009
(51) Int. Cl.: H02B 13/025

(54) **Gas insulated switchgear**
Gasisolierte Schaltanlage
Commutation isolée du gaz

(43) Date of publication of application: 20.04.2011
(73) Proprietor: ABB Technology AG, 8050 Zürich (CH)
(72) Inventor: Hyrenbach, Maik, Dr.-Ing., 40878 Ratingen (DE); Klaes, Walter, 40880 Ratingen (DE); Fussbahn, Olaf, 40885 Ratingen (DE)
(74) Representative: Schmidt, Karl Michael

(56) References cited:
- DE-A1- 3 927 835
- US-A- 5 193 049

## Description

The invention relates to a gas insulated switchgear for medium or high voltage use in case of at least two switchgear panels arranged beside (together), with means for pressure relief in the housing of the switchgear, or a compartment of the switchgear. The protection against internal failures in switchgears (internal arc) is very important. Depending on the design and the erection on side according to the standard, the protection can be limited to the different areas front, left and right sides and rear sides. Known solutions for protecting the rear side are:
- Individual vertical back plasma ducts, which are designed panel by panel.

The plasma is guided to the ceiling.
- Plasma ducts which are connected horizontal with a common outlet of the plasma.

In both solutions absorbers might be used to cool down the plasma before it leaves the duct. This guides to the following disadvantages.
- High pressure in the limited volume of the duct and the risk of reflected plasma on the ceiling. When plasma absorbers are used, this is increasing the costs of the solution significantly.
- The duct has to be assembled between the panels in a high quality, as it has to withstand a high pressure and no plasma is to be allowed to be blown out between the connection points.

For different panel types the variance of the duct can become quite huge.

DE 39 27 835 discloses a Gas insulated switchgear for medium or high voltage use in which in case of at least two switchgear panels arranged beside, means for pressure relief in the housing of the switchgear are applied, with means for splitting escaping plasma at the rear side of the panel arrangement, in order to distribute the plasma.

A common disadvantage is, that the ducts are limiting the heat transfer of the encapsulations as there is no free air movement in horizontal and/or vertical direction. This is limiting the maximum nominal current of the switchgear.

The known solutions are mostly panel oriented solutions, means the ducts are dimensioned for one panel and the cross section is related to the panel dimensions.

So it is an object of the invention, to overcome these disadvantages and to generate a constructive solution by low costs but high functional efficiency, which reduces the pressure of occuring plasma very quick and efficient.

According to the invention, a gas insulated switchgear is provided with a pressure relief which is arranged at the rear side of the housing or compartment and it corresponds with guiding means, which guide in case of a escaping plasma at first in direction to the floor, from where it will be splitted or distributed by splitting or distributing means over more than one panel rear side.

This causes a distribution of the plasma over more than one panel rearside, and so in result over a much greater area as in the state of the art. By this the plasma will be eliminated or cooled down or pressure reduced much more effectively.

Preferably, at the rear side of the switchgear housing metal sheets are arranged as a cover in a distance from the housing or compartment (panel) rear side, so that there is an interspace between the cover and the rear side, in which the splitting and/or distributing means are arranged.

So the plasma will escape over the pressure relief in the rear side of the panel. Then the plasma will be deflected towards the bottom or the ceiling. So in the easiest embodiment, the bottom itself is the guiding or reflecting means, which causes a distribution of the plasma over the rear side area of several panels. So the plasma will be furthermore pressure reduced more and more, ande therefore very effective.

A further preferred embodiment is, that the bottom of the interspace is closed, in order to reflect the plasma towards the top of the interspace in that way. So the plasma can not escape under the panels towards the front side of the panels.

It is an intention of the invention, that at the top of the interspace a further plasma deflector is arranged, in order to guide the plasma at the top away from the cover.

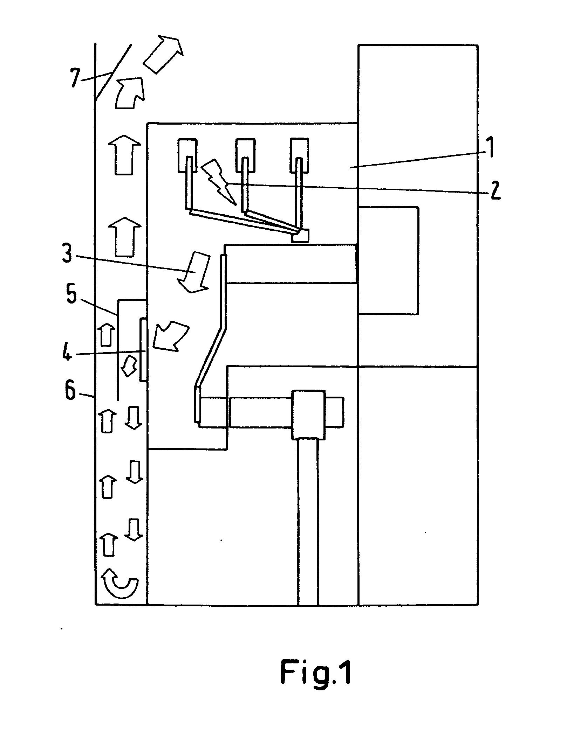

For this, the deflector is preferably arranged in an angle a between 20° and 70° form the upper vertical position, so that the plasma finally escape like shown in the figure 1.

It is preferred, that the pressure relief is located in the high or medium voltage equipment compartment of the switchgear, because this compartment of the switch gear is the possible source of light arcs and occurring plasma.

For a quick and effective elimination of the plasma, the deflector and/or the reflecting or guiding means are connected electrically on ground potential.

An embodiment of the invention is shown in the drawings.
Figure 1: Principle side view of gas insulated switchgear
Figure 2: Principle rear side view of gas insulated switchgear

Figur 1 shows a sectional side view of the gas insulated switchgear from the side view. In the panel is arranged a compartment 1 with high voltage equipment, such as switching devices for medium or high voltage. As an example, an internally occurring light arc 2 is shown, which generates a plasma 3 which is flowing towards the pressure relief. Because the light arc induced increasing pressure inside the compartment 1, it cracks the pressure relief, so that the plasma escapes through this pressure relief in the rear side of the panel. A first pressure relief guide/reflector element 5 is located there at the pressure relief, in order to guide the plasma at first towards the bottom. From there the plasma is reflected by a metal sheet or a cover 6, which is arranged with a distance to the rear side of the panel, and which could be bended at the bottom towards the rear side of the panel. Another alternative is, that the floor itself is the deflecting or guiding means for distributing the plasma over several panel rear sides.

From this zone of reflection, the plasma is distributed over more than one panel rear side, and increases finally towards the top of the metal sheet 6 where a deflector 7 as last guiding means is arranged. This deflector 7 should be arranged in an angle a of preferably 25° from the upside vertical position, in order to deflect the plasma slightly over the panel topside, but away from the metal sheet 6.

The angle is measured from the vertical position of the cover.

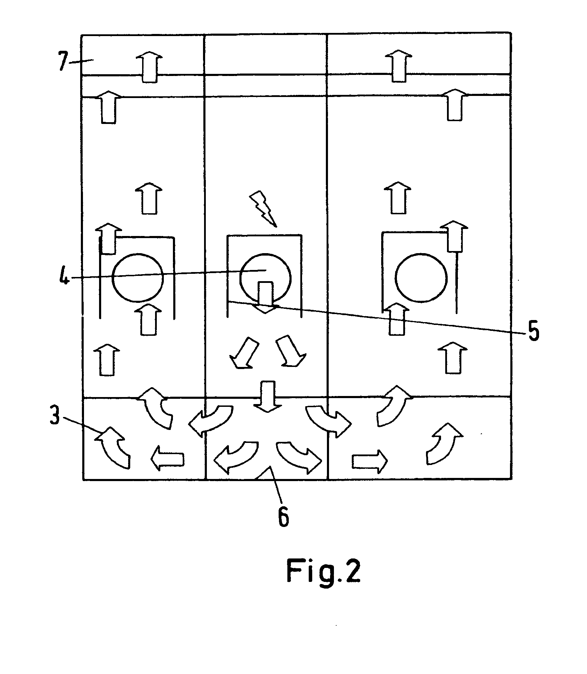

Figure 2 shows a rear view on the rear side of an ensemble of three panels. Here it can be clearly seen, that after reflecting/distributing the plasma towards the bottom, it will be reflected from the bottom side and spread over the complete rearside arrangement of more than one panel rear side. By this distribution of the plasma over a greater area, it will be reduced in pressure very efficiently and quickly.

In the proposed solution a back cover of sheet metal is assembled to the rear side of the switchgear, with a defined distance between the panel rear side and the cover. The cover is assembled to every panel, but open to both sides and the top, except at the end of the complete switchgear, where the sides are closed by the use of end covers. It is also possible that one sheet metal is covering two or three panels, depending on the dimensions of each panel.

The pressure relief of the panel compartments are guiding to the backside in the area between the rear side of the compartment and the back cover.
To use the space between the compartment rear side and the rear covers to reduce pressure and take out some energy, the plasma may be directed to the floor first and is then reflected to the top, by the limits given by the floor and the end covers. This is enlarging the available crossection and reducing the pressure significant.
At the upper end of the back cover a deflector with a defined angle between the back cover and the deflector is assembled, which is guiding the plasma to the front. This ensures that there is no risk of reflection of plasma on the ceiling in the direction of personnel located behind the panel. The angle is calculated in that way, that there is also no risk for the operator located in front of the panel.

### Position numbers

- 1: GIS compartment
- 2: Ligth arc
- 3: Plasma
- 4: Pressure relief
- 5: Reflector
- 6: Cover / metal sheet
- 7: Plasma deflector
- 8: Rear side

## Claims

1. Gas insulated switchgear for medium or high voltage use in case of at least two switchgear panels arranged beside (together), with means for pressure relief in the housing of the switchgear, or a compartment of the switchgear,
wherein the pressure relief (4) is arranged at the rear side of the housing or compartment and it corresponds with guiding means (5), which guide in case of a escaping plasma (3) at first in direction to the floor, from where it will be splitted or distributed by splitting or distributing means (6) over more than one panel rear side, **characterized by**, that at the rear side of the at least two switchgear panel housing metal sheets (6) are arranged as a cover in a distance from the housing or compartment (panel) rear side, so that there is an interspace between the cover (6) and the rear side, in which the splitting and/or distributing means (5, 6, 7) are arranged.

2. Gas insulated switchgear according to claim 1,
**characterized in,**
**that** the bottom of the interspace is closed, in order to reflect the plasma towards the top of the interspace.

3. Gas insulated switchgear according to claim 2,
**characterized in,**
**that** at the top of the interspace a further plasma deflector (7) is arranged, in order to guide the plasma (3) at the top away from the cover.

4. Gas insulated switchgear according to claim 2,
**characterized in,**
**that** the deflector (7) is arranged in an angle 20° ≤ a ≤ 70° from the upper vertical position.

5. Gas insulated switchgear according to claim 4,
**characterized in,**
**that** the pressure relief is located in the high or medium voltage equipment compartment of the switchgear.

6. Gas insulated switchgear according to one of the aforesaid claims, **characterized in,**
**that** the deflector and/or the reflecting or guiding means are made of electrical conductive material.

7. Gas insulated switchgear according to claim 6,
**characterized in,**
**that** the conductive material is metal.

8. Gas insulated switchgear according to claim 6,
**characterized in,**
**that** the conductive material is conductive plastic material.

9. Gas insulated switchgear according to one the aforesaid claims, **characterized in,**
**that** the deflector and/or the reflecting or guiding means are connected electrically on ground potential.

## Patentansprüche

1. Gasisolierte Schaltanlage zur Verwendung bei Mittel- oder Hochspannung, für den Fall, dass mindestens zwei Schaltfelder nebeneinander (zusammen) angeordnet sind, mit Mitteln zur Druckentlastung in dem Gehäuse der Schaltanlage oder einem Raum der Schaltanlage,
wobei die Druckentlastung (4) an der Rückseite des Gehäuses oder Raumes angeordnet ist und Führungsmitteln (5) entspricht, die im Falle eines Plasmaaustrittes (3) dieses zunächst in Richtung des Bodens lenken, von wo es durch Aufteilungs- oder Verteilungsmittel (6) über mehr als eine Feldrückseite aufgeteilt oder verteilt wird,
**dadurch gekennzeichnet, dass** an der Rückseite der mindestens zwei Schaltfelder Gehäuse-Metallbleche (6) als eine Abdeckung mit einem Abstand von der Gehäuse oder Raum (Feld) -Rückseite angeordnet sind, derart, dass ein Zwischenraum zwischen der Abdeckung (6) und der Rückseite gebildet wird, in dem die Aufteilungs- und/oder Verteilungsmittel (5, 6, 7) angeordnet sind.

2. Gasisolierte Schaltanlage gemäß Anspruch 1,
**dadurch gekennzeichnet, dass** der Boden des Zwischenraumes geschlossen ist, um das Plasma in Richtung der Oberseite des Zwischenraumes abzulenken.

3. Gasisolierte Schaltanlage gemäß Anspruch 2,
**dadurch gekennzeichnet, dass** an der Oberseite des Zwischenraumes ein weiterer Plasmadeflektor (7) angeordnet ist, um das Plasma (3) an der Oberseite von der Abdeckung weg zu führen.

4. Gasisolierte Schaltanlage gemäß Anspruch 2,
**dadurch gekennzeichnet, dass** der Deflektor (7) in einem Winkel 20° ≤ a ≤ 70° von der oberen vertikalen Position angeordnet ist.

5. Gasisolierte Schaltanlage gemäß Anspruch 4,
**dadurch gekennzeichnet, dass** sich die Druckentlastung im Geräteraum für Hoch- oder Mittelspannung der Schaltanlage befindet.

6. Gasisolierte Schaltanlage gemäß einem der vorhergehenden Ansprüche,
**dadurch gekennzeichnet, dass** der Deflektor und/oder die Ablenkungs- oder Führungsmittel aus elektrisch leitendem Material hergestellt sind.

7. Gasisolierte Schaltanlage gemäß Anspruch 6,
**dadurch gekennzeichnet, dass** das leitfähige Material Metall ist.

8. Gasisolierte Schaltanlage gemäß Anspruch 6,
**dadurch gekennzeichnet, dass** das leitfähige Material leitfähiges Kunststoffmaterial ist.

9. Gasisolierte Schaltanlage gemäß einem der vorhergehenden Ansprüche,
**dadurch gekennzeichnet, dass** der Deflektor und/oder die Ablenkungs- oder
Führungsmittel elektrisch mit dem Erdpotenzial verbunden sind.

## Revendications

1. Appareillage de commutation à isolation gazeuse pour application à moyenne ou à haute tension dans le cas d'au moins deux panneaux d'appareillage de commutation disposés l'un à côté de l'autre (ensemble), comprenant des moyens d'évacuation de la pression dans le boîtier de l'appareillage de commutation ou un compartiment de l'appareillage de commutation, les moyens d'évacuation de la pression (4) étant disposés du côté arrière du boîtier ou du compartiment et étant en correspondance avec des moyens de guidage (5) qui, dans le cas de l'échappement d'un plasma (3), guident celui-ci tout d'abord en direction du sol d'où il sera réparti ou distribué par des moyens de répartition ou de distribution (6) sur plus d'un côté arrière du panneau, **caractérisé en ce que** sur le côté arrière du boîtier des au moins deux panneaux d'appareillage de commutation sont disposées des feuilles métalliques (6) faisant office de capot à une distance du côté arrière du boîtier ou du compartiment (panneau) telle qu'il existe entre le capot (6) et le côté arrière un interstice dans lequel sont disposés les moyens de répartition et/ou de distribution (5, 6, 7).

2. Appareillage de commutation à isolation gazeuse selon la revendication 1, **caractérisé en ce que** le fond de l'interstice est fermé afin de renvoyer le plasma en direction du haut de l'interstice.

3. Appareillage de commutation à isolation gazeuse selon la revendication 2, **caractérisé en ce qu'**un déflecteur de plasma (7) supplémentaire est disposé sur le haut de l'interstice afin de guider le plasma (3) en haut à distance du capot.

4. Appareillage de commutation à isolation gazeuse selon la revendication 2, **caractérisé en ce que** le déflecteur (7) est disposé à un angle 20° ≤ a ≤ 70° par rapport à la position verticale supérieure.

5. Appareillage de commutation à isolation gazeuse selon la revendication 4, **caractérisé en ce que** les moyens d'évacuation de la pression se trouvent dans le compartiment de l'équipement à haute ou moyenne tension de l'appareillage de commutation.

6. Appareillage de commutation à isolation gazeuse selon l'une des revendications précédentes, **caractérisé en ce que** le déflecteur et/ou les moyens de réflexion ou de guidage sont constitués d'un matériau électriquement conducteur.

7. Appareillage de commutation à isolation gazeuse selon la revendication 6, **caractérisé en ce que** le matériau conducteur est un métal.

8. Appareillage de commutation à isolation gazeuse selon la revendication 6, **caractérisé en ce que** le matériau conducteur est une matière plastique conductrice.

9. Appareillage de commutation à isolation gazeuse selon l'une des revendications précédentes, **caractérisé en ce que** le déflecteur et/ou les moyens de réflexion ou de guidage sont reliés électriquement au potentiel de la terre.
